# EUROPÄISCHE PATENTSCHRIFT

(11) **EP 0 636 473 B1**
(45) Veröffentlichungstag und Bekanntmachung des Hinweises auf die Patenterteilung: **08.12.1999**
(21) Anmeldenummer: 94110649.4
(22) Anmeldetag: 08.07.1994
(51) Int. Cl.: B32B 27/28, B32B 27/08, C08L 23/16, C08L 23/08

(54) **Tiefziehfähige Folie, Verfahren zu deren Herstellung und Verwendung derselben**
Deep drawable film, method for its manufacture and its use
Film emboutissable, procédé pour sa fabrication et son utilisation

(30) Priorität: 28.07.1993 DE 4325360; 07.09.1993 DE 4330202
(43) Veröffentlichungstag der Anmeldung: 01.02.1995
(73) Patentinhaber: ALKOR GMBH KUNSTSTOFFE, D-81451 München (DE)
(72) Erfinder: Dous, Eberhardt, D-82237 Steinebach (DE); Mathavan, Thambirajah, D-80993 München (DE)
(74) Vertreter: Seiler, Siegfried

(56) Entgegenhaltungen:
- EP-A- 0 146 349
- EP-A- 0 568 815
- EP-A- 0 630 746
- US-A- 5 206 294

## Beschreibung

Die vorliegende Erfindung betrifft eine tiefziehfähige Verbundfolie, die (bezogen auf 100 Gew.-Teile Kunststoff der Folie) als Unterfolie 1 bis 60 Gew.-% (a) mindestens eines teilweise vernetzten EPDM, 12 bis 30 Gew.-% (b) Propylenhomo-, -copolymerisat oder -pfropfpolymerisat mit oder ohne reaktive Gruppen, 77 bis 9,5 Gew.-% (c) mindestens eines reaktive Gruppen enthaltenden Polymeren und/oder Ionomeren auf der Basis von Ethylen und Methacrylsäure oder Acrylsäure, wobei die Säuregruppen teilweise Metallion enthalten oder durch Metallionen neutralisiert sind, und 10 bis 0,5 Gew.-% (d) mindestens eines reaktive Gruppen enthaltendes polymeres Vernetzungsmittel enthält, das zu mehr als 51 Gew.-% (bezogen auf 100 Gew.-Teile (d)) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten, sowie gegebenenfalls mindestens einen Füllstoff, Zusatz- und/oder Verarbeitungshilfsmittel besteht, wobei die Folie eine tiefziehfähige Verbundfolie ist, die mindestens eine polyolefinhaltige Unterfolie, enthaltend die Kunststoffbestandteile (a), (b), (c) und (d), aufweist, und mindestens eine qualitativ und quantitativ von der Zusammensetzung der Unterfolie abweichende polyolefinhaltige oder olefingruppenhaltige Oberfolie, wobei die Oberfolie mindestens zwei verschiedene polyolefinhaltige oder olefingruppenhaltige Kunststoffe sowie gegebenenfalls Füllstoffe, Zusatz- und/oder Verarbeitungshilfsmittel enthalt.

Gemäß der Erfindung enthalt die Oberfolie mindestens eine Schicht mit einer Kunststoffmischung, die einen bestimmten E-Modul bzw. E-Modulbereich aufweist.

Die unterschiedlichsten Folien auf der Basis von Polyolefinen, insbesondere solcher auf der Basis von Polypropylen mit Polyethylen und deren Verarbeitung sind bereits bekannt.

Die Anforderungen an die Folien je nach Verwendungsgebiet sind jedoch so unterschiedlich und mit steigenden Ansprüchen verbunden, daß ein Bedürfnis nach Folien mit verbesserten Eigenschaften und/oder verbesserten Verarbeitungsmöglichkeiten besteht.

Aus der US-A-5206294 ist bereits eine Kunststoffmischung bekannt, die teilweise vernetztes EPDM, Polypropylen, reaktive Gruppen enthaltende Polymere oder Ionomere und ein reaktive Gruppen enthaltendes polymeres Vernetzungsmittel enthält. Die daraus hergestellten Monofolien sind gut tiefziehfähig, erfüllen jedoch nicht andere von der Kraftfahrzeugindustrie geforderte Eigenschaften.

Im Rahmen dieser Erfindung wurden zahlreiche Versuche mit Folienrezepturen durchgeführt, bei denen unter anderem solche getestet wurden, die ein vernetztes PP-EPDM und ein unvernetztes Propylen-Block-Copolymerisat oder heterophasiges Propylen-Block-Polymerisat enthielten. Diese Folien weisen eine gute Narbstabilität auf und haben einen gewissen Mattierungsgrad bzw. eine bestimmte Mattigkeit, wie sie bei mehreren Anwendungsgebieten (z.B. Autoinnenverkleidung und dergleichen) gewünscht wird.

Die Folie dieser Zusammensetzung hat jedoch den Nachteil, daß sie schlecht tiefziehfähig ist und die Narbstabilität zum Teil verloren geht. Es ergibt sich somit, daß auch die Eigenschaften dieser Folie verbesserungsbedürftig sind.

Die bisher bekannten Verfahren zur Mattierung von flexiblen PP-EP- oder PP-EPDM-Zusammensetzungen mit mineralischen Füllstoffen, z. B. Talkum, bewirken eine Zunahme der Steifigkeit und eine Verschlechterung des Alterungsverhaltens. Außerdem wird der Matteffekt vom Verformungsgrad stark beeinflußt. Auch die Verwendung von elastomeren Partikeln in Gummimischungen (vergleiche u. a. EP-B-0257242) sind nicht geeignet.

In der EP-A-0630746 wurde bereits vorgeschlagen, die Folie gemäß US-A-5206294 mit gewissen Änderungen der chemischen Bestandteile als Unterfolie zu verwenden, wobei die Oberfolie (bezogen auf 100 Gew.-Teile Kunststoff der Oberfolie) (a) 20 bis 80 Gew.-Teile mindestens eines vernetzten PP-EPDM und (b) 80 bis 20 Gew.-Teile eines unvernetzten Propylen-Block-Copolymerisates oder heterophasigen Propylen-Block-Polyzmerisates mit einem Elastomeranteil im Block bzw. in der Kette von 35 bis 75 Gew.-% enthält, wobei (b) zu 15 bis 1 Gew-%, vorzugsweise 10 bis 2 Gew.-%, durch die gleiche Gewichtsmenge eines reaktive Gruppen enthaltenden Polymeren und/oder Ionomeren (c) ersetzt ist, wobei (c) mindestens einen reaktive Gruppen enthaltenden Polymeren und/oder Ionomeren auf der Basis von Ethylen und Methacrylsäure und/oder Acrylsäure ist, wobei die Säuregruppen teilweise Metallionen enthalten oder durch Metallionen neutralisiert sind.

Aus der EP-A-0146349 ist weiterhin ein Laminat bekannt, das eine thermoplastische Elastomerschicht aufweist, bestehend hauptsächlich aus einer Zusammensetzung, die ein Polyolefin und ein olefinisches Copolymer-Elastomeres, von denen mindestens eines teilweise vernetzt ist, enthält. Die andere Schicht des Laminates besteht aus einem teilweise neutralisierten Ionomer oder einem 1-Olefin/(Meth)-acrylsäure-Copolymerisat, das eine freie Carboxyl-Gruppe besitzt. Das Laminat wird für extrudierte Teile verwendet, die eine gute Oberflächenhärte und Stoßfestigkeit aufweisen, ohne daß ein Tiefziehvorgang erforderlich oder durchgeführt wird.

Aus der EP-A-0568815 ist eine Folie oder ein Formkörper aus einem thermoplastischen Kunststoff auf der Basis eines teilkristallinen Ethylen-Propylen-Dien-Terpolymers, eines Homo- und/oder Copolymers eines Alken und eines polymeren Modifizierungsmittels bekannt. Der thermoplastische Kunststoff enthält ein teilkristallines statistisches Ethylen-Propylen-Dien-Terpolymer, das zu mindestens etwa 30 % vernetzt ist und stellt ein thermoplastisches Elastomer dar. Auf etwa 70 bis 30 Gew.-Teile des teilkristallinen Ethylen-Propylen-Dien-Terpolymers entfallen etwa 30 bis 70 Gew.-Teile eines Homo- und/oder Copolymers von Ethylen und/oder Propylen und der thermoplastische Kunststoff enthält mindestens etwa 5 Gew.-% eines teilkristallinen und/oder amorphen Modifizierungsmittels, wobei der gewichtsprozentuale Summenanteil des Ethylens und Propylens in dem teilkristallinen Ethylen-Propylen-Dien-Terpolymer zwischen etwa 15 und 91 Gew.-% liegt. Die Folie dient auch für Kraftfahrzeuginnenverkleidungen, wobei jedoch eine spezielle Verbundfolie nicht beschrieben wird.

Besondere Anforderungen an Kunststoffolien werden zur Herstellung tiefziehfähiger Kraftfahrzeugfolien, -bahnen oder Kraftfahrzeugfolienschichten gestellt, da bei den Formteilen unterschiedliche Tiefziehverhältnisse (am gleichen Formteil) eingehalten werden müssen. Trotzdem soll das Formteil an allen Stellen die gleiche Prägestruktur und Mattigkeit aufweisen. Andererseits werden besondere Anforderungen an die Kratzfestigkeit der Kunststoffoberflächen, Fogwerte, die Alterungsstabilität und dergleichen gestellt.

Ziel und Aufgabe der vorliegenden Erfindung war es, gegenüber dem Stand der Technik eine verbesserte Folie mit verbesserten Eigenschaften oder Verarbeitungseigenschaften zu erzielen. Insbesondere sollte die Folie eine gute Narbstabilität aufweisen. Insbesondere sollte jedoch die Folie gut tiefziehfähig sein und auch zu Formteilen oder Gegenständen verarbeitet werden können, an die relativ hohe Anforderungen gestellt werden. Auch sollte die Delaminierungsgefahr und die Trennbarkeit von den unterhalb der Unterfolie liegenden Schichten verringert sein.

Derartige Anwendungsgebiete sind zum Beispiel Formteile, Gegenstände oder Tiefziehteile für Kraftfahrzeuge, insbesondere Kraftfahrzeuginnenverkleidungen, Schalttafeln für Kraftfahrzeuge und dgl.

Erfindungsgemäß wurde festgestellt, daß diesen Zielen und Aufgaben eine tiefziehfähige Verbundfolie gerecht wird, die (bezogen auf 100 Gew.-Teile Kunststoff der Folie) als Unterfolie 1 bis 60 Gew.-% (a) mindestens eines teilweise vernetzten EPDM 12 bis 30 Gew.-% (b) Propylenhomo-, -copolymerisat oder -pfropfpolymerisat mit oder ohne reaktive Gruppen 77 bis 9,5 Gew.-% (c) mindestens eines reaktive Gruppen enthaltenden Polymeren und/oder Ionomeren auf der Basis von Ethylen und Methacrylsäure oder Acrylsäure, wobei die Säure-Gruppen teilweise Metallion enthalten oder durch Metallionen neutralisiert sind, und 10 bis 0,5 Gew.-% (d) mindestens eines reaktive Gruppen enthaltendes polymeres Vernetzungsmittel enthält, das zu mehr als 51 Gew.-% (bezogen auf 100 Gew.-Teile (d)) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten sowie gegebenenfalls mindestens einen Füllstoff, Zusatz- und/oder Verarbeitungshilfsmittel besteht, wobei die Folie eine tiefziehfähige Verbundfolie ist, die mindestens eine polyolefinhaltige Unterfolie, enthaltend die Kunststoffbestandteile (a), (b), (c) und (d), aufweist, und mindestens eine qualitativ und quantitativ von der Zusammensetzung der Unterfolie abweichende polyolefinhaltige oder olefingruppenhaltige Oberfolie, wobei die Oberfolie mindestens zwei verschiedene polyolefinhaltige oder olefingruppenhaltige Kunststoffe sowie gegebenenfalls Füllstoffe, Zusatz- und/oder Verarbeitungshilfsmittel enthält.

Gemäß der Erfindung enthält die Oberfolie mindestens eine Schicht oder besteht daraus, die als Kunststoffanteil oder Kunststoffmischung (x) 5 bis 80 Gew.-Teile mindestens eines elastischen reaktive Gruppen enthaltenden Polymeren oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-% (bezogen auf 100 Gew.-Teile des elastomerhaltigen Polymeren oder Polymergemisches), (y) 95 bis 20 Gew.-Teile mindestens eines reaktive Gruppen enthaltenden Olefinco-, -ter- und/oder -pfropfpolymerisates und/oder eines Ionomeren enthaltend oder auf der Basis eines Polyolefinhomo-, -co-, -ter- und/oder -pfropfpolymerisates, enthält oder daraus besteht, wobei der E-Modul der Mischung von (x) und (y) oder der E-Modul der daraus thermogeformten Kunststoffolie oder Kunststoffolienbahn oder der Schicht zwischen 50 bis 600 N/mm² liegt, wobei die reaktive Gruppen Carboxyl-, Hydroxyl-, Anhydrid-, Amin-, Amid-, Isocyanat-, Epoxy- und/oder Nitro-Gruppe sind.

Die Unterfolie oder Unterfolien (bezogen auf 100 Gew.-Teile Kunststoff der Unterfolie bzw. Unterfolien) besteht nach einer vorzugsweisen Ausführungsform aus (a) 5 bis 55 Gew.-% mindestens eines teilweise vernetzten EPDM, (b) 13 bis 25 Gew.-% Propylenhomo-, copolymerisat oder -pfropfpolymerisat mit oder ohne reaktive Gruppen, (c) 73 bis 19 Gew.-% mindestens eines reaktive Gruppen enthaltenden Polymeren und/oder Ionomeren auf der Basis von Ethylen und Methacrylsäure oder Acrylsäure, wobei die Säure-Gruppen teilweise Metallion enthalten oder durch Metallionen neutralisiert sind und (d) 9 bis 1 Gew.-% mindestens eines reaktive Gruppen enthaltendes polymeres Vernetzungsmittel, das zu mehr als 51 Gew.-% (bezogen auf 100 Gew.-Teile (d)) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid und/oder Anhydridgruppen gelten, sowie vorzugsweise mindestens ein Zusatz- und/oder Verarbeitungshilfsmittel oder die Unterfolie enthält diese Bestandteile.

Obgleich die Tiefziehfähigkeit der Oberfolie verbesserungsbedürftig ist und die Unterfolie keine gute Narbstabilität aufweist, ergibt sich in der Kombination von Ober- und Unterfolie(n) überraschenderweise bei der Verbundfolie eine sehr gute Prägbarkeit, Narbstabilität und eine sehr gute Tiefziehfähigkeit.

Die erfindungsgemäße Verbundfolie stellt eine flexible tiefziehfähige Kraftfahrzeugfolie oder -bahn dar, die für die Herstellung thermoverformter Formteile mit gleichmäßig matter Oberfläche für Kraftfahrzeugfolien für Innenverkleidungen besonders gut geeignet ist. Die Mattigkeit dieser Folie ist weitgehend unabhängig von der Verformungstemperatur und dem Verformungsgrad, d.h. an allen Stellen des Formteiles ist gleiche oder annähernd gleiche Mattigkeit der Folienoberfläche oder des daraus hergestellten thermogeformten Formteiles gegeben.

Gemäß einer bevorzugten Ausführungsform der Erfindung enthält die Oberfolie mindestens eine Schicht oder besteht daraus, die als Kunststoffanteil oder Kunststoffmischung 10 bis 60 Gew.-Teile, mindestens eines elastischen reaktive Gruppen enthaltenden Polymeren oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-% vorzugsweise mehr als 75 Gew.-% (bezogen auf 100 Gew.-Teile des elastomerhaltigen Polymeren oder Polymergemisches), sowie (y) 90 bis 40 Gew.-Teile, mindestens eines reaktive Gruppen enthaltenden Polyolefins oder polyolefinhaltigen Ionomeren, vorzugsweise mindestens eines reaktive Gruppen enthaltenden Olefin-co-, -ter- und/oder -pfropfpolymerisat und/oder eines Ionomeren enthaltend oder auf der Basis eines Polyolefinhomo-, co-, -ter- und/oder -pfropfpolymerisates, enthält oder daraus besteht, wobei der E-Modul der Mischung von (x) und (y) oder E-Modul der daraus thermogeformten Kunststoffolie oder Kunststoffolienbahn oder der Schicht (bei mehrschichtigen Kunststoffolien) zwischen 50 bis 600 N/mm², vorzugsweise 70 und 550 N/mm², liegt.

Die reaktive Gruppen des reaktive Gruppen enthaltenden Polyolefins und/oder des zusätzlich reaktive Gruppen enthaltenden elastischen Polymers oder thermoplastischen Elastomeren sind vorzugsweise Carboxyl-, Hydroxyl-, Anhydrid-, Amin-, Amid-, Isocyanat-, Epoxy- und/oder Nitro-Gruppen. Der Gewichtsanteil an reaktiven Gruppen beträgt 0,2 bis 30 Gew.-%, vorzugsweise 0,3 bis 25 Gew.-%, bezogen auf das oder die reaktive Gruppen enthaltenden elastischen Polymeren (berechnet mit 100 Gew.-Teilen) oder reaktive Gruppen enthaltenden thermoplastischen Elastomeren oder Polymermischungen gemaß (x) und 0,2 bis 25 Gew.-%, vorzugsweise 0,5 bis 20 Gew.-%, bezogen auf das oder die reaktive Gruppen enthaltende(n) Polyolefin(e) oder polyolefinhaltige(n) Ionomere(n) (gemäß (y)).

Das oder die elastischen reaktive Gruppen enthaltende(n) Polymere(n) und/oder thermoplastische(n) Elastomere(n) ist bzw. sind ganz oder teilweise mit dem reaktiven Polyolefin verbunden, wobei die Bindung ganz oder teilweise durch co-valente Bindung und/oder Ionenbindung erfolgt.

Das reaktive Gruppen enthaltende elastische Polymer und/oder thermoplastische Elastomere besteht nach einer Ausführungsform aus Mischungen von verschiedenen reaktiven und nichtreaktiven Polymeren, wobei jedoch der Gesamtgehalt an reaktiven Gruppen der Mischungen 0,2 bis 30 Gew.-%, vorzugsweise 0,3 bis 25 Gew.-% (bezogen auf 100 Gew.-% des reaktive Gruppen enthaltenden Polymergemisches), beträgt.

Durch den Zusatz olefingruppen- oder polyolefingruppenhaltiger Elastomere in der Oberfolie werden der Verformungsbereich, die Gleichmäßigkeit der Wärmedehnung und das Narbbild verbessert.

Nach einer bevorzugten Ausführungsform weist die Ober- und/oder Unterfolie einen Füllstoffgehalt von 0 bis 30 Gewichtsanteilen, vorzugsweise 0 bis 20 Gewichtsanteilen (bezogen auf 100 Gewichtsanteile Kunststoff) auf. Als Füllstoffe können die an sich bekannten Füllstoffe, vorzugsweise Talkum und/oder Si0₂ mit einer mittleren Teilchengröße von 0,01 bis 20 µm, vorzugsweise 0,05 bis 10 µm, eingesetzt werden.

Als Verarbeitungshilfsmittel werden u. a. vorzugsweise Warme- und/oder Lichtstabilisatoren für Polyolefine eingesetzt.

Als weitere Verarbeitungshilfsmittel oder Zusatzmittel werden u. a. Gleitmittel oder Gleitmittelgemische verwendet.

Nach einer bevorzugten Ausführungsform enthält die Oberfolie, insbesondere bei der Herstellung des aus (x) und (y) bestehende Kunststoffgemisches je 100 Gew.-Teile (z) 0,5 bis 30 Gew.-Teile, vorzugsweise 5 bis 25 Gew.-Teile, eines weiteren oder anderen Thermoplasten (z) (ausgenommen jedoch des freien, reaktive Gruppen enthaltenden Polyolefins oder polyolefinischen Ionomers oder des thermoplastischen Elastomeren oder elastischen Polymeren).

Nach einer bevorzugten Ausführungsform enthält die Oberfolie je 100 Gew.-Teile von (x) und (y) oder von (x), (y) und (z) zusätzlich 0,01 bis 6 Gew.-Teile mindestens eines Verarbeitungshilfs- oder Zusatzmittels, vorzugsweise mindestens eines Stabilisators, Antioxidants, UV-Absorbers, Gleitmittels und/oder Antistatikums in einer Schicht.

Die Kunststofformmasse oder kunststoffhaltige Formmasse zur Herstellung der Oberfolie oder Oberfolienbahn enthält somit (x) 5 bis 80 Gew.-Teile, vorzugsweise 10 bis 60 Gew.-Teile, mindestens eines elastischen reaktive Gruppen enthaltenden Polymeren und/oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-% vorzugsweise mehr als 75 Gew.-% (bezogen auf 100 Gew.-Teile des elastomerhaltigen Polymeren oder Polymergemisches), (y) 95 bis 20 Gew.-Teile, vorzugsweise 90 bis 40 Gew.-Teile, mindestens eines reaktive Gruppen enthaltenden Polyolefins oder polyolefinhaltigen Ionomeren, vorzugsweise mindestens eines reaktive Gruppen enthaltenden Olefinco-, -ter- und/oder -pfropfpolymerisat und/oder eines Ionomeren enthaltend oder auf der Basis eines Polyolefinco-, -ter- und/oder -pfropfpolymerisates, und/oder (x), (y) und (z) 0,5 bis 30 Gew.-Teile, vorzugsweise 5 bis 25 Gew.-Teile, eines Thermoplasten (ausgenommen jedoch des freien, reaktive Gruppen enthaltenden Polyolefins oder polyolefinischen Ionomers oder thermoplastischen Elastomeren oder elastischen Polymeren selbst) als Kunststoffanteil oder bestehen daraus wobei das elastische Polymere, Elastomere und/oder elastomerhaltige Polymere oder Polymergemisch (x) einen unterschiedlichen 2-%-E-Modul, vorzugsweise einen um mehr als 10 N/mm² unterschiedlichen, insbesondere niedrigeren 2-%-E-Modul (gemessen bei 20°C), aufweist als das reaktive Gruppen enthaltende Polyolefin und/oder olefinische Ionomer, und bezogen auf 100 Gew.-Teile (x) und (y) oder (x), (y) und (z) die Kunststoffolie, Kunststoffbahn oder Schicht der mehrschichtigen Kunststoffolie oder Kunststoffolienbahn zusätzlich 0,01 bis 30 Gew.-Teile, vorzugsweise 0,1 bis 20 Gew.-Teile, mindestens eines Füllstoffes, ausgewählt aus der Gruppe der Metalloxide, Metallcarbonate, Metalldioxide, Metallhydrate, Metallhydroxide, Hydrotalcite und/oder Silicate, und/oder eines organischen Füllstoffes, ausgewählt aus der Gruppe der feinteiligen Cellulose, Stärke und/oder des feinteiligen Kohlenstoffes, vorzugsweise jedoch Calciumcarbonat, Zinkoxid, Magnesiumoxid, Calciumoxid und/oder Siliciumdioxid, Talkum, Glimmer oder Wollastonit, 0,01 bis 5 Gew.-Teile, vorzugsweise 0,1 bis 3 Gew.-Teile, mindestens eines Stabilisators, Antioxidants und/oder UV-Absorbers, 0,01 bis 5 Gew.-Teile, vorzugsweise 0,1 bis 3 Gew.-Teile, mindestens eines Farbstoffes und/oder Farbpigmentes, 0 bis 3 Gew.-Teile, vorzugsweise 0,01 bis 2 Gew.-Teile, mindestens eines Gleitmittels und/oder Antistatikums, 0 bis 20 Gew.-Teile, vorzugsweise 1 bis 12 Gew.-Teile, mindestens eines Flammschutzmittels enthält oder daraus besteht.

Das reaktive Gruppen enthaltende Polyolefin (y) besteht nach einer vorzugsweisen Ausführungsform aus einer Mischung oder Legierung und/oder einem Co- oder Pfropfpolymerisat aus einem Olefin, vorzugsweise Ethylen und/oder Propylen, und einer mindestens eine ungesättigte Bindung enthaltende Carbonsäure und/oder dessen Anhydrid, vorzugsweise Acrylsäure, Methacrylsäure, Maleinsäure und/oder Maleinsäureanhydrid, und/oder einem Olefin oder Polyolefin, vorzugsweise Ethylen oder Polyethylen, und einer mindestens eine Epoxygruppe enthaltende Verbindung, vorzugsweise Methacrylatglycid, oder einem Copolymerisat einer oder mehrerer dieser Verbindungen oder enthält diese.

Nach einer weiteren bevorzugten Ausführungsform besteht oder bestehen das oder die elastische(n) Polymere(n), die reaktive Gruppen oder zusätzliche reaktive Gruppen enthaltende Verbindungen besitzen, aus einem reaktive Gruppen enthaltenden Ethylen-Propylen-Mischpolymerisat (EPM), einem reaktive Gruppen enthaltenden oder reaktive modifizierten Ethylen-Propylen-Dien-Mischpolymerisat (EPDM), reaktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-Blockpolymeren mit Ethylen-Butylen und Ethylen-Propylen, einem elastischen Polyester und/oder Polyetherester, Polyesteramid, Polyetheramid oder Copolyester oder Polyurethan oder Polyether-Urethan-Segmentpolymeren.

Als Bestandteil (d) sind u. a. geeignet: Vinylacetathomo-, -co-, -terpolymerisate, Acrylsäureesterpolymerisate, vorzugsweise Ethylen-Acrylsäureester-Polymerisate, Ethylen-Acrylsäure-Acrylsäureester-Polymerisate (EAA), Methacrylsäureester-Polymerisate, Polymerisate von Maleinsäureanhydrid usw.

Nach einer bevorzugten Ausführungsform der Erfindung weist die Oberfolie eine Shore D-Härte auf (oder ist darauf eingestellt), die um mehr als 3 Shore D-Einheiten, vorzugsweise 5 bis 10 Shore D-Einheiten, niedriger ist als die Shore D-Harte der Unterfolie(n) und/oder die Oberflächenspannung der Oberfolie ist aufeinen Wert von größer als 40 mN/m eingestellt.

Bevorzugt ist die Oberfolie unter Verwendung mindestens eines Kunststoffes mit einer niedrigeren Shore D-Härte und mindestens eines Bestandteiles oder Kunststoffes mit einer höheren Shore D-Härte auf eine Shore D-Harte von weniger als 37, vorzugsweise auf eine Shore D-Härte von 28 bis 35, eingestellt und die Shore D-Harte der Unterfolie(n) beträgt mindestens 38 Shore D, vorzugsweise 39 bis 48 Shore D.

Nach einer Ausführungsform ist unterhalb der Folienschicht vorzugsweise eine Haftvermittlerschicht angeordnet. Die Haftvermittlerschicht besteht vorzugsweise aus Acrylaten, Polyurethan oder Acrylat-Polyurethan-Mischungen oder enthalt diese. Unterhalb der Folienschicht oder Haftvermittlerschicht ist vorzugsweise eine Schaumschicht, eine Trägerschicht, eine Gewebeschicht und/oder Stützschicht angeordnet. Die Schaumschicht enthält vorzugsweise einen Polyolefinschaum oder einen Polyurethanschaum oder besteht daraus.

Bevorzugt hat die Oberfolie eine mittlere Dicke von 60 bis 500 µm, vorzugsweise 100 bis 350 µm. Die Unterfolie oder Unterfolien besitzen eine durchschnittliche Dicke von 100 bis 2000 µm, vorzugsweise 500 bis 1500 µm, wobei die Unterfolie oder Unterfolien eine Gesamtdicke besitzen, die mehr als das 1,5 fache, vorzugsweise 2- oder mehrfache, der Oberfolie beträgt.

Die erfindungsgemäße Verbundfolie ist sehr gut thermoverformbar und dient zur Herstellung spannungsarmer Formteile mit genauer Wiedergabe oder Reproduktion von form- oder temperaturstabilen Oberflächenstrukturierungen. Die Verbundfolie wird vorzugsweise im Positivtiefziehverfahren und/oder Negativtiefziehverfahren bearbeitet bzw. verarbeitet. Der Verbundwerkstoff weist an der Unterseite oder Unterfläche vorzugsweise eine Schaumschicht, z.B. Polyurethanschaum, vorzugsweise jedoch Polyolefinschaum auf und/oder ist mit einer Trägerschicht bzw. einem Träger und/oder einer Stützschicht und/oder einer Gitter- oder Gewebeschicht versehen. Die Folie oder Schicht wird nach einer bevorzugten Ausführungsform mit Dekorgebungen, Narbungen, Prägungen und dergleichen versehen, ist narbbeständig, griffreundlich und kann bedruckt werden. Unter Verwendung der erfindungsgemäßen Verbundfolie gelingt es Formteile oder Gegenstände herzustellen, deren Oberfläche eine gute Narbstabilität auch bei Wärmelagerung aufweisen.

Die daraus hergestellten oder tiefgezogenen Gegenstände, Formkörper, Teile und dergleichen, die vorzugsweise eine Schaumschicht, Trägerschicht oder einen Träger, Stützschicht und/oder eine Gitter- oder Gewebeschicht enthalten, werden bevorzugt für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge eingesetzt.

Nach einer bevorzugten Ausführungsform ist dabei die Trägerschicht und/oder Schaumschicht polyolefinhaltig oder auf der Basis von Polyolefinen.

Das reaktive Gruppen enthaltende polymere Vernetzungsmittel (d) der Unterfolie oder Unterfolien weist nach einer bevorzugten Ausführungsform neben Acrylat- und/oder Methacrylat-Gruppen bzw. Acrylsäure- und/oder Methacrylsäuregruppen und mehr als 51 Gew.-% Ethylen- und/oder Olefin- bzw. (CH₂)- oder CH-Gruppen, Epoxidgruppen oder epoxyähnliche Gruppen, vorzugsweise Glycidylgruppen, auf.

Die reaktive Gruppen enthaltenden Polymeren und/oder Ionomeren (c) der Unterfolie enthalten als Metallion vorzugsweise Alkali- und/oder Erdalkali-Ionen und/oder Zinkionen.

Nach einer Ausführungsform enthalten die reaktive Gruppen aufweisenden Polymeren und/oder Ionomeren (d) Alkylacrylate und/oder Alkylmethacrylate mit 1 bis 8 C-Atomen.

Das Elastomer des Ethylen-Propylen-Copolymerisates weist einen Ethylenanteil von 20 bis 70 Gew.-%, vorzugsweise 30 bis 60 Gew.-%, und einen Propylenanteil von 80 bis 30 Gew.-%, vorzugsweise 70 bis 40 Gew.-%, auf und besitzt ein Molekulargewicht größer als 100.000.

Das heterophasige Propylen-Blockpolymerisat besitzt nach einer weiteren Ausführungsform einen MFI 230/216 g/10 min von 0,3 bis 8, vorzugsweise 0,5 bis 7.

Als PP-EPDM, vorzugsweise dynamisch vernetztes oder teilvernetztes PP-EPDM, sind solche mit einer Dichte zwischen 0,78 bis 0,96 g/cm³, vorzugsweise 0,83 bis 0,93 g/cm³, in der Ober- und/oder Unterfolie enthalten.

Nach einer weiteren bevorzugten Ausführungsform ist oberhalb der Oberfolie oder auf der Folienoberfläche und/oder unterhalb der Unterfolie mindestens eine polyacrylat-, polymethacrylat- und/oder polyurethanhaltige Schicht angeordnet, deren Schichtdicke geringer als die Schichtdicke der Oberfolie oder Unterfolie ist, wobei vorzugsweise die Schichtdicke der Beschichtung weniger als 50 % der Schichtdicke der Ober- oder Unterfolie(n) beträgt.

Bevorzugt ist dabei die Oberfolie und gegebenenfalls Teilbereiche der Unterfolie(n) geprägt oder genarbt und mit einer polyacrylat-, polymethacrylat- und/oder polyurethanhaltigen Schicht oder Beschichtung versehen, die 0,01 bis 18 Gew.-%, vorzugsweise 0,1 bis 12 Gew.-%, mindestens eines feinteiligen Mattierungsmittels enthält und durch Verdünnungsmittelauftrag beschichtet ist.

Die unterhalb der Unterfolie(n) angeordnete(n) polyacrylat-, polymethacrylat- und/oder polyurethanhaltigen oder (bezogen auf den Kunststoffanteil) daraus bestehende(n) Schicht(en) oder Beschichtung(en) enthalt mindestens ein antistatisches Mittel und/oder mindestens ein haftvermittelndes chemisches Mittel, vorzugsweise feinstteiligen Kohlenstoff oder Ruß mit einer mittleren Teilchengröße unter 100 nm, vorzugsweise zwischen 10 bis 80 nm, und/oder mindestens eine feinstteilige Kieselsäure oder ein feinstteiliges Siliziumdioxyd und/oder feinstteiliges Silikat mit einem mittleren Körnungsdurchmesser unter 4 µm, vorzugsweise unter 3 µm.

Für die Herstellung der Kunststoffolie werden vorzugsweise zwei oder mehrere Extruder verwendet, die mit einer Breitschlitzextruderdüse ausgerüstet sind.

Wie bereits erwähnt, wird die Shore D-Harte der Oberfolie unter Verwendung und/oder Mitverwendung mindestens eines polyolefinhaltigen oder polyolefingruppenhaltigen Kunststoffes mit einer niedrigeren Shore D-Härte (gemessen nach DIN 53505) sowie gegebenenfalls unter Verwendung mindestens eines polyolefinhaltigen oder polyolefingruppenhaltigen Kunststoffes mit einer höheren Shore D-Härte auf einen Shore D-Wert eingestellt, der um mehr als 3 Shore D-Einheiten, vorzugsweise um 5 bis 10 Shore D-Einheiten, niedriger ist als der Shore D-Wert der darunter angeordneten Unterfolie.

Zweckmäßig wird dabei die Härte der Oberfolie unter Auswahl der polyolefinhaltigen und/oder olefingruppenhaltigen Kunststoffe oder Bestandteile mit niedrigerer und höherer Shore D-Härte und deren Gewichtsmengen auf eine Härte von weniger als 37 D-Shore, vorzugsweise 28 bis 35 D-Shore (gemessen nach DIN 53505) und die Härte der Unterfolie(n) aufmindestens 38 D-Shore, vorzugsweise 39 bis 46 D-Shore, eingestellt.

Nach einer anderen bevorzugten Ausführungsform werden die Oberfolie (auf ihrer der Unterfolie abgewandten Fläche) und/oder die Unterfolie (auf ihrer der Oberfolie abgewandten Fläche) mit mindestens einer polyacrylat-, polymethacrylat- und/oder polyurethanhaltigen und Verdünnungsmittel, vorzugsweise organisch-chemische Lösemittel, enthaltenden Beschichtung unter Verwendung eines Beschichtungsmittelauftragsverfahrens, vorzugsweise unter Verwendung eines Spritz-, Sprüh-, Streich-, Rollen- oder Druckwalzenauftragsverfabrens, versehen, wobei die Beschichtung der Oberfolie 0,01 bis 18 Gew.-% vorzugsweise 0,1 bis 12 Gew.-%, mindestens eines feinteiligen Mattierungsmittels enthält.

Für die unterhalb der Unterfolie angeordnete Schicht oder Beschichtung wird mindestens ein antistatisches Mittel und/oder mindestens ein haftvermittelndes chemisches Mittel, vorzugsweise feinstteiliger Kohlenstoff oder Ruß mit einer mittleren Teilchengröße unter 100 nm, vorzugsweise 10 bis 80 nm, und/oder mindestens eine feinstteilige Kieselsäure oder ein feinstteiliges Siliziumdioxyd und/oder Silikat mit einem mittleren Körnungsdurchmessr unter 4 µm, vorzugsweise unter 3 µm, verwendet.

Die vorliegende Erfindung betrifft weiterhin die Verwendung der Verbundfolie alleine oder in Kombination mit einer Schaumschicht, Trägerschicht oder einem Träger, Stützschicht, Abstandsschicht oder einer Gitter- oder Gewebeschicht zur Herstellung von Kraftfahrzeuginnenverkleidungen, vorzugsweise für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge.

| **Beispiel Unterfolie** | **(1)** | **(2)** |
|---|---|---|
| PP-Blockpolymer¹ | 30 | - |
| PP-MA⁶ | - | 30 |
| EPDM⁴ | 40 | - |
| EPDM⁵ | - | 30 |
| Ionomer² | 27 | - |
| Ionomer³ | - | 35 |
| Ethylene glycidyl methacrylat | 3 | 5 |

| | | |
|---|---|---|
| (¹) MFI = 0,8 230 °C/21,6 N | | |
| (²) Kationtyp Zinc MFI 1,0 190 °C/21,6 N | | |
| (³) Kationtyp Zinc MFI 3,0 190 °C/21,6 N | | |
| (⁴) Mooney Viskosität ML 1+4 121 °C = 40 | | |
| (⁵) Mooney Viskosität ML 1+4 121 °C = 48 | | |
| (⁶) Acrylsäuregehalt 6 % | | |

### Zeichnungsbeschreibung

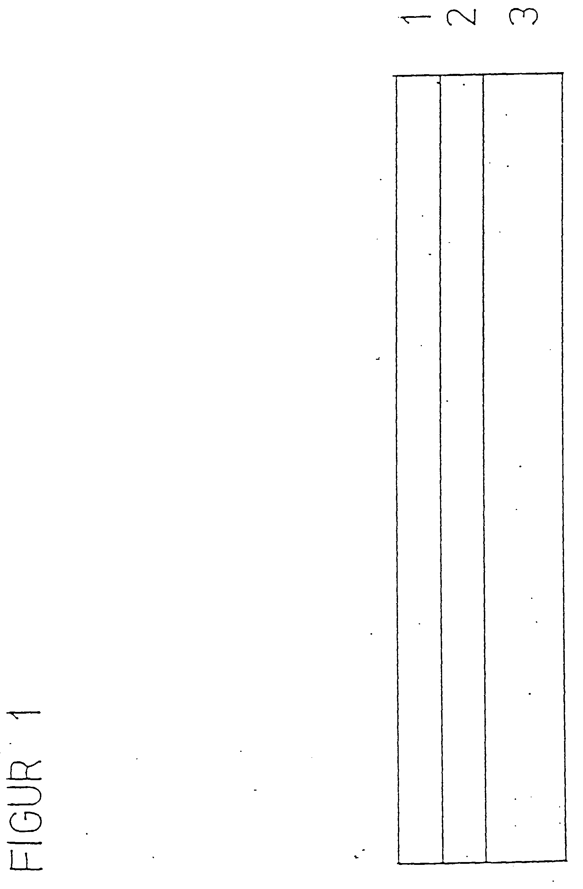

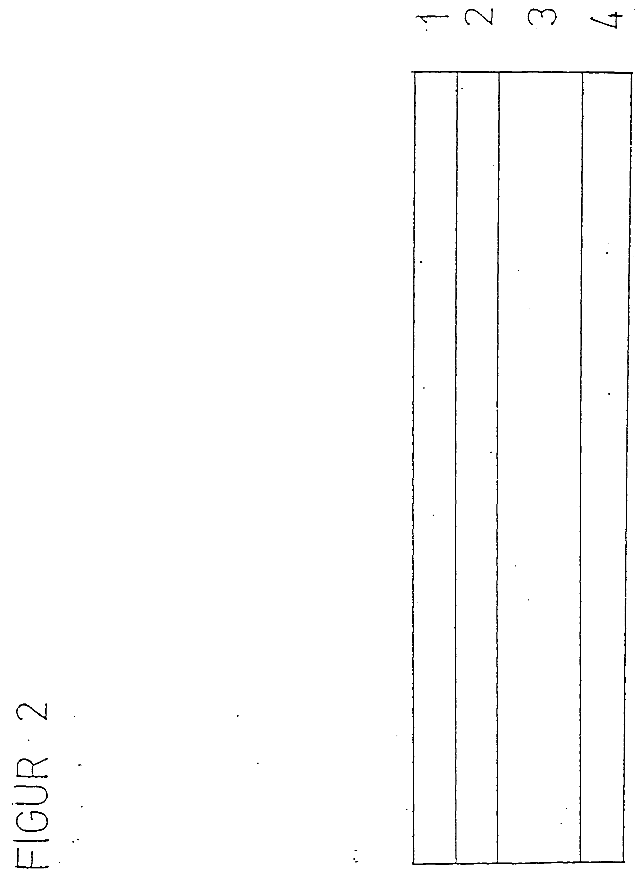

In den beigefügten Zeichnungen (Figur 1 und 2) sind schematisch einige Ausführungsbeispiele der erfindungsgemäßen Verbundfolie wiedergegeben, wobei die Dickenabmessungen nicht den eigentlichen Dicken der Schichten entsprechen (so insbesondere bei der Oberflächenschutzschicht bzw. Lackschicht, die in der Praxis zwischen 8 bis 60 µm, vorzugsweise 10 bis 50 µm, liegt).

Unter (1) ist die Lack- oder Oberflächenschutzschicht wiedergegeben, die vorzugsweise in Form eines Verbindungs- oder Lösungsmittels wie Kunstharz für die Oberflächenbeschichtung aufgetragen wird.

Unter der Oberfolie (2) ist bzw. sind die Unterfolie(n) (3) angeordnet. In Figur 2 ist zusätzlich eine weitere Schicht (4) schematisch dargestellt, die eine Schaumschicht und/oder Trägerschicht ist.

## Patentansprüche

1. Tiefziehfähige Verbundfolie, die (bezogen auf 100 Gew.-Teile Kunststoff der Folie) als Unterfolie
1 bis 60 Gew.-% (a)
mindestens eines teilweise vernetzten EPDM
12 bis 30 Gew.-% (b)
Propylenhomo-, -copolymerisat oder -pfropfpolymerisat mit oder ohne reaktive Gruppen
77 bis 9,5 Gew.-% (c)
mindestens eines reaktive Gruppen enthaltenden Polymeren und/oder Ionomeren auf der Basis von Ethylen und Methacrylsäure oder Acrylsäure, wobei die Säure-Gruppen teilweise Metallion enthalten oder durch Metallionen neutralisiert sind und
10 bis 0,5 Gew.-% (d)
mindestens eines reaktive Gruppen enthaltendes polymeres Vernetzungsmittel, das zu mehr als 51 Gew.-% (bezogen auf 100 Gew.-Teile (d)) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten sowie gegebenenfalls mindestens einen Füllstoff, Zusatz- und/oder Verarbeitungshilfsmittel enthält, wobei die Folie eine tiefziehfahige Verbundfolie ist, die mindestens eine polyolefinhaltige Unterfolie, enthaltend die Kunststoffbestandteile (a), (b), (c) und (d), aufweist, und mindestens eine qualitativ und quantitativ von der Zusammensetzung der Unterfolie abweichende polyolefinhaltige oder olefingruppenhaltige Oberfolie, wobei die Oberfolie mindestens zwei verschiedene polyolefinhaltige oder olefingruppenhaltige Kunststoffe sowie gegebenenfalls Füllstoffe, Zusatz- und/oder Verarbeitungshilfsmittel enthält, dadurch gekennzeichnet, daß die Oberfolie mindestens eine Schicht enthält oder daraus besteht, die als Kunststoffanteil oder Kunststoffmischung (x) 5 bis 80 Gew.-Teile mindestens eines elastischen reaktive Gruppen enthaltenden Polymeren oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-% (bezogen auf 100 Gew.-Teile des elastomerhaltigen Polymeren oder Polymergemisches), (y) 95 bis 20 Gew.-Teile mindestens eines reaktive Gruppen enthaltenden Olefinco-, -ter- und/oder -pfropfpolymerisat und/oder eines Ionomeren enthaltend oder auf der Basis eines Polyolefinhomo-, -co-, -ter- und/oder -pfropfpolymerisates, enthält oder daraus besteht, wobei der E-Modul der Mischung von (x) und (y) oder der E-Modul der daraus thermogeformten Kunststoffolie oder Kunststoffolienbahn oder der Schicht zwischen 50 bis 600 N/mm² liegt, wobei die reaktiven Gruppen Carboxyl-, Hydroxyl-, Anhydrid-, Amin-, Amid-, Isocyanat-, Epoxy- und/oder Nitro-Gruppen sind.

2. Tiefziehfähige Folie nach Anspruch 1, dadurch gekennzeichnet, daß der Gewichtsanteil an reaktiven Gruppen 0,2 bis 30 Gew.-%, vorzugsweise 0,3 bis 25 Gew.-%, bezogen auf das oder die reaktive Gruppen enthaltenden elastischen Polymeren (berechnet mit 100 Gew.-Teilen) oder reaktive Gruppen enthaltenden thermoplastischen Elastomeren oder Polymermischungen gemaß (x) und 0,2 bis 25 Gew.-%, vorzugsweise 0,5 bis 20 Gew.-%, bezogen auf das oder die reaktive Gruppen enthaltende(n) Polyolefin(e) oder polyolefinhaltige(n) Ionomere(n) (gemäß (y)) beträgt.

3. Tiefziehfähige Folie nach Ansprüchen 1 und 2, dadurch gekennzeichnet, daß die Oberfolie je 100 Gew.-Teile (z) 0,5 bis 30 Gew.-Teile, vorzugsweise 5 bis 25 Gew.-Teile, eines weiteren oder anderen Thermoplasten (ausgenommen jedoch des freien, reaktive Gruppen enthaltenden Polyolefins oder polyolefinischen Ionomers oder des thermoplastischen Elastomeren oder elastischen Polymeren) enthält.

4. Tiefziehfähige Folie nach einem oder mehreren der Ansprüche 1 bis 3, dadurch gekennzeichnet, daß die Oberfolie je 100 Gew.-Teile von (x) und (y) oder von (x), (y) und (z) zusätzlich 0,01 bis 6 Gew.-Teile mindestens eines Verarbeitungshilfs- oder Zusatzmittels, vorzugsweise mindestens eines Stabilisators, Antioxidants, UV-Absorbers, Gleitmittels und/oder Antistatikums in einer Schicht oder die Kunststoffolie oder die Kunststoffolienbahn enthält oder daraus besteht.

5. Tiefziehfähige Folie nach einem oder mehreren der Ansprüche 1 bis 4, dadurch gekennzeichnet, daß die Oberfolie oder Oberfolienbahn als Kunststoff (x) 10 bis 60 Gew.-Teile mindestens eines elastischen reaktive Gruppen enthaltenden Polymeren und/oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-%, vorzugsweise mehr als 75 Gew.-% (bezogen auf 100 Gew.-Teile des elastomerhaltigen Polymeren oder Polymergemisches), (y) 90 bis 40 Gew.-Teile mindestens eines reaktive Gruppen enthaltenden Polyolefins oder polyolefinhaltigen Ionomeren, vorzugsweise mindestens eines reaktive Gruppen enthaltenden Olefinco-, -ter- und/oder -pfropfpolymerisats und/oder eines Ionomeren enthaltend oder auf der Basis eines Polyolefinco-, -ter- und/oder -pfropfpolymerisates, und/oder (x), (y) und (z) 5 bis 25 Gew.-Teile eines Thermoplasten (ausgenommen jedoch des freie, reaktive Gruppen enthaltenden Polyolefins oder polyolefinischen Ionomers oder thermoplastischen Elastomeren oder elastischen Polymeren selbst) enthält oder daraus besteht, wobei das elastische Polymere, Elastomere und/oder elastomerhaltige Polymere oder Polymergemisch (x) einen unterschiedlichen 2-%-E-Modul, vorzugsweise einen um mehr als 10 N/mm² unterschiedlichen, insbesondere niedrigeren, 2-%-E-Modul (gemessen bei 20 °C), aufweist als das reaktive Gruppen enthaltende Polyolefin und/oder olefinische Ionomere, und bezogen auf 100 Gew.-Teile (x) und (y) oder (x), (y) und (z) die Kunststoffolie, Kunststoffbahn oder Schicht der mehrschichtigen Kunststoffolie oder Kunststoffolienbahn zusätzlich 0,01 bis 30 Gew.-Teile, vorzugsweise 0,1 bis 20 Gew.-Teile, mindestens eines Füllstoffes, ausgewählt aus der Gruppe der Metalloxide, Metallcarbonate, Metalldioxide, Metallhydrate, Metallhydroxide, Hydrotalcite und/oder Silicate, und/oder eines organischen Füllstoffes, ausgewählt aus der Gruppe der feinteiligen Cellulose, Stärke und/oder des feinteiligen Kohlenstoffes, vorzugsweise jedoch Calciumcarbonat, Zinkoxid, Magnesiumoxid, Calciumoxid und/oder Siliciumdioxid, Talkum, Glimmer oder Wollastonit, 0,01 bis 5 Gew.-Teile, vorzugsweise 0,1 bis 3 Gew.-Teile, mindestens eines Stabilisators, Antioxidants und/oder UV-Absorbers, 0,01 bis 5 Gew.-Teile, vorzugsweise 0,1 bis 3 Gew.-Teile, mindestens eines Farbstoffes und/oder Farbpigmentes, 0 bis 3 Gew.-Teile, vorzugsweise 0,01 bis 2 Gew.-Teile, mindestens eines Gleitmittels und/oder Antistatikums, 0 bis 20 Gew.-Teile, vorzugsweise 1 bis 12 Gew.-Teile, mindestens eins Flammschutzmittels enthält oder daraus besteht.

6. Tiefziehfähige Folie nach einem oder mehreren der Ansprüche 1 bis 5, dadurch gekennzeichnet, daß das reaktive Gruppen enthaltende Polyolefin (y) aus einer Mischung oder Legierung und/oder einem Co- oder Pfropfpolymerisat aus einem Olefin, vorzugsweise Ethylen und/oder Propylen, und einer mindestens eine ungesättigte Bindung enthaltende Carbonsäure und/oder dessen Anhydrid, vorzugsweise Acrylsäure, Methacrylsäure, Maleinsäure und/oder Maleinsäureanhydrid, und/oder einem Olefin oder Polyolefin, vorzugsweise Ethylen oder Polyethylen, und einer mindestens eine Epoxygruppe enthaltende Verbindung, vorzugsweise Methacrylatglycid, oder einem Copolymerisat einer oder mehrerer dieser Verbindungen besteht oder diese enthält.

7. Tiefziehfähige Folie nach einem oder mehreren der Ansprüche 1 bis 6, dadurch gekennzeichnet, daß das oder die elastische(n) Polymere(n), die reaktive Gruppen oder zusätzliche reaktive Gruppen enthaltende Verbindungen besitzen, aus einem reaktive Gruppen enthaltenden Ethylen-Propylen-Mischpolymerisat (EPM), einem reaktive Gruppen enthaltenden oder reaktiv modifiziertem Ethylen-Propylen-Dien-Mischpolymerisat (EPDM), reaktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-Blockpolymeren mit Ethylen-Butylen und Ethylen-Propylen, einem elastischen Polyester und/oder Polyetherester, Polyesteramid, Polyetheramid oder Co-polyester oder Polyurethan oder Polyether-Urethan-Segmentpolymeren besteht oder bestehen.

8. Verwendung der Verbundfolie nach einem oder mehreren der Ansprüche 1 bis 7 allein oder in Kombination mit einer Schaumschicht, Trägerschicht oder einem Träger, Stützschicht, Abstandsschicht oder einer Gitter- oder Gewebeschicht zur Herstellung von Kraftfahrzeuginnenverkleidungen, vorzugsweise für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge.

## Claims

1. A thermoformable composite sheet which (relative to 100 parts by weight plastics material of the sheet) contains as lower sheet
1 to 60% by weight (a)
of at least one partially cross-linked EPDM,
12 to 30% by weight (b)
propylene homopolymer, copolymer or graft polymer with or without reactive groups,
77 to 9.5% by weight (c)
of at least one polymer and/or ionomer, containing reactive groups, based on ethylene and methacrylic acid or acrylic acid, the acid groups partially containing metal ions or being neutralised by metal ions, and
10 to 0.5% by weight (d)
of at least one polymeric cross-linking agent containing reactive groups, which contains more than 51% by weight (relative to 100 parts by weight (d)) ethylene or other olefin groups and 1 to 49% by weight acrylate and/or methacrylate groups and reactive groups, with epoxy, isocyanate, ketone, aldehyde, silane, alkyl halide and/or anhydride groups being considered as reactive groups, and also optionally at least one filler, additive and/or processing aid, the sheet being a thermoformable composite sheet which has at least one polyolefin-containing lower sheet, containing the plastics constituents (a), (b), (c) and (d), and at least one upper sheet containing polyolefins or olefin groups which differs in quality and quantity from the composition of the lower sheet, the upper sheet containing at least two different plastics materials containing polyolefins or olefin groups and also optionally fillers, additives and/or processing aids, characterised in that the upper sheet contains or consists of at least one layer which as plastics content or plastics mixture contains or consists of (x) 5 to 80 parts by weight of at least one elastic polymer containing reactive groups or of at least one thermoplastic elastomer containing reactive groups or a polymer or polymer mixture containing reactive groups and having a content of elastic polymers of more than 60% by weight (relative to 100 parts by weight of the elastomer-containing polymer or polymer mixture), (y) 95 to 20 parts by weight of at least one olefin copolymer, terpolymer and/or graft polymer containing reactive groups and/or of an ionomer containing or based on a polyolefin homopolymer, copolymer, terpolymer and/or graft polymer, with the elasticity modulus of the mixture of (x) and (y) or the elasticity modulus of the plastics sheet or plastics sheet web thermoformed therefrom or of the layer being between 50 and 600 N/mm², the reactive groups being carboxyl, hydroxyl, anhydride, amine, amide, isocyanate, epoxy and/or nitro groups.

2. A thermoformable sheet according to Claim 1, characterised in that the proportion by weight of reactive groups is 0.2 to 30% by weight, preferably 0.3 to 25% by weight, relative to the elastic polymer(s) containing reactive groups (calculated at 100 parts by weight) or thermoplastic elastomers or polymer mixtures containing reactive groups according to (x) and 0.2 to 25% by weight, preferably 0.5 to 20% by weight, relative to the polyolefin(s) or polyolefin-containing ionomer(s) containing reactive groups (according to (y)).

3. A thermoformable sheet according to Claims 1 and 2, characterised in that the upper sheet contains in each case per 100 parts by weight (z) 0.5 to 30 parts by weight, preferably 5 to 25 parts by weight, of an additional or other thermoplastics material (but with the exception of the free polyolefin or polyolefinic ionomer containing reactive groups or of the thermoplastic elastomer or elastic polymer).

4. A thermoformable sheet according to one or more of Claims 1 to 3, characterized in that the upper sheet per 100 parts by weight of (x) and (y) or of (x), (y) and (z) additionally contains 0.01 to 6 parts by weight of at least one processing aid or additive, preferably at least one stabilizer, antioxidant, UV-absorber, lubricant and/or antistatic agent in a layer, or the plastics sheet or the plastics sheet web consists thereof.

5. A thermoformable sheet according to one or more of Claims 1 to 4, characterized in that the upper sheet or upper sheet web as plastics material contains or consists of (x) 10 to 60 parts by weight of at least one elastic polymer containing reactive groups and/or of at least one thermoplastic elastomer containing reactive groups or a polymer or polymer mixture containing reactive groups, with a content of elastic polymers of more than 60% by weight, preferably more than 75% by weight (relative to 100 parts by weight of the elastomer-containing polymer or polymer mixture), (y) 90 to 40 parts by weight of at least one polyolefin or polyolefin-containing ionomer containing reactive groups, preferably at least one olefin copolymer, terpolymer and/or graft polymer containing reactive groups and/or of an ionomer containing or based on a polyolefin copolymer, terpolymer and/or graft polymer, and/or (x), (y) and (z) 5 to 25 parts by weight of a thermoplastics material (but with the exception of the free reactive-group-containing polyolefin or polyolefinic ionomer or thermoplastic elastomer or elastic polymer itself), the elastic polymer, elastomer and/or elastomer-containing polymer or polymer mixture (x) having a different 2% elasticity modulus, preferably a 2% elasticity modulus which differs by more than 10 N/mm², in particular a lower elasticity modulus (measured at 20°C) than the polyolefin containing reactive groups and/or olefinic ionomer, and relative to 100 parts by weight (x) and (y) or (x), (y) and (z) the plastics sheet, plastics web or layer of the multi-layer plastics sheet or plastics sheet web additionally 0.01 to 30 parts by weight, preferably 0.1 to 20 parts by weight, of at least one filler, selected from the group consisting of metal oxides, metal carbonates, metal dioxides, metal hydrates, metal hydroxides, hydrotalcites and/or silicates, and/or of an organic filler, selected from the group consisting of finely divided cellulose, starch and/or finely divided carbon, but preferably calcium carbonate, zinc oxide, magnesium oxide, calcium oxide and/or silicon dioxide, talcum, mica or wollastonite, 0.01 to 5 parts by weight, preferably 0.1 to 3 parts by weight, of at least one stabiliser, antioxidant and/or UV-absorber, 0.01 to 5 parts by weight, preferably 0.1 to 3 parts by weight, of at least one dye and/or coloured pigment, 0 to 3 parts by weight, preferably 0.01 to 2 parts by weight, of at least one lubricant and/or antistatic agent, 0 to 20 parts by weight, preferably 1 to 12 parts by weight, of at least one flameproofing agent.

6. A thermoformable sheet according to one or more of Claims 1 to 5, characterised in that the polyolefin (y) containing reactive groups consists of or contains a mixture or alloy and/or a copolymer or graft polymer consisting of an olefin, preferably ethylene and/or propylene, and a carboxylic acid containing at least one unsaturated bond and/or the anhydride thereof, preferably acrylic acid, methacrylic acid, maleic acid and/or maleic acid anhydride, and/or an olefin or polyolefin, preferably ethylene or polyethylene, and a compound containing at least one epoxy group, preferably methacrylate glycide, or a copolymer of one or more of these compounds.

7. A thermoformable sheet according to one or more of Claims 1 to 6, characterised in that the elastic polymer(s) which contain reactive groups or additional compounds containing reactive groups consist(s) of an ethylene-propylene mixed polymer (EPM) containing reactive groups, an ethylene-propylene-diene mixed polymer (EPDM) which contains reactive groups or is reactively modified, reactive-group-containing diblock polymers, consisting of styrene with butadiene, with isoprene, with ethylene-butylene or with ethylene-propylene, preferably of styrene-3 block polymers containing reactive groups with ethylene-butylene and ethylene-propylene, an elastic polyester and/or polyether ester, polyester amide, polyether amide or copolyester or polyurethane or polyether-urethane block polymers.

8. The use of the composite sheet according to one or more of Claims 1 to 7 alone or in combination with a foam layer, backing layer or a backing, supporting layer, spacer layer or a lattice or fabric layer for producing interior trims for motor vehicles, preferably for control panels or dashboards for motor vehicles, side wall parts for motor vehicles, door trims for motor vehicles, internal roof linings (car roof liners), internal rear wall parts for motor vehicles (rear parcel shelves) and other internal trim parts or articles for motor vehicles.

## Revendications

1. Film composite emboutissable, qui contient (par rapport à 100 parts en poids de matière synthétique du film) à titre de film inférieur
1 à 60 % en poids (a)
d'au moins un EPDM partiellement réticulé,
12 à 30% en poids (b)
d'un homopolymère, copolymère ou polymère greffé de propylène avec ou sans groupes réactionnels,
77 à 9,5 % en poids (c)
d'au moins un polymère et/ou ionomère contenant des groupes réactionnels, à base d'éthylène et d'acide méthacrylique ou d'acide acrylique, les groupes acides contenant partiellement des ions métalliques ou étant neutralisés par des ions métalliques, et
10 à 0,5% en poids (d)
d'au moins un agent de réticulation polymère contenant des groupes réactionnels, qui contient plus de 51 % en poids (par rapport à 100 parts en poids de (d)) de groupes d'éthylène ou d'autres groupes oléfiniques et 1 à 49 % en poids de groupes d'acrylate et/ou de méthacrylate et de groupes réactionnels, en considérant à titre de groupes réactionnels les groupes époxyde, isocyanate, cétone, aldéhyde, silane, halogénure d'alkyle et/ou anhydride, de même qu'éventuellement au moins une matière de charge, un additif et/ou un adjuvant de mise en oeuvre, le film étant un film composite emboutissable, qui présente au moins un film inférieur contenant des polyoléfines, comprenant les constituants de matière synthétique (a), (b), (c) et (d) et au moins un film supérieur contenant des polyoléfines ou des groupes oléfiniques, différant qualitativement et quantitativement de la composition du film inférieur, le film supérieur comprenant au moins deux matières synthétiques contenant des polyoléfines ou des groupes oléfiniques différentes, de même qu'éventuellement des matières de charge, des additifs et/ou des adjuvants de mise en oeuvre, caractérisé en ce que le film supérieur contient ou est constitué d'au moins une couche qui contient ou est constituée, à titre de teneur en matière synthétique ou mélange de matières synthétiques, de (x) 5 à 80 parts en poids d'au moins un polymère élastique contenant des groupes réactionnels ou d'au moins un élastomère thermoplastique contenant des groupes réactionnels ou d'un polymère ou mélange de polymères contenant des groupes réactionnels avec une teneur en polymères élastiques de plus de 60 % en poids (par rapport à 100 parts en poids du polymère ou mélange de polymères contenant des élastomères), de (y) 95 à 20 parts en poids d'au moins un copolymère, terpolymère et/ou polymère greffé oléfinique contenant des groupes réactionnels et/ou d'un ionomère comprenant ou à base d'un homopolymère, copolymère, terpolymère et/ou polymère greffé polyoléfinique, le module E du mélange de (x) et de (y) ou le module E du film en matière synthétique ou de la bande de film en matière synthétique, thermoformé(e) à partir de celui-ci, ou de la couche se situant entre 50 et 600 N/mm², les groupes réactionnels étant des groupes carboxyle, hydroxyle, anhydride, amine, amide, isocyanate, époxy et/ou nitro.

2. Film emboutissable selon la revendication 1, caractérisé en ce que la teneur pondérale en groupes réactionnels s'élève à 0,2 à 30 % en poids, de préférence à 0,3 à 25 % en poids, par rapport au ou aux polymère(s) élastique(s) contenant des groupes réactionnels (calculés pour 100 parts en poids) ou aux élastomères thermoplastiques contenant des groupes réactionnels ou aux mélanges de polymères conformément à (x) et à 0,2 à 25 % en poids, de préférence à 0,5 à 20 % en poids par rapport à la ou aux polyoléfine(s) ou ionomère(s) comprenant des polyoléfines, contenant des groupes réactionnels (conformément à (y)).

3. Film emboutissable selon les revendications 1 et 2, caractérisé en ce que le film supérieur contient, par 100 parts en poids, (z) 0,5 à 30 parts en poids, de préférence 5 à 25 parts en poids, d'une matière thermoplastique supplémentaire ou différente (à l'exception cependant de la polyoléfine ou de l'ionomère polyoléfinique, libre, contenant des groupes réactionnels, ou de l'élastomère thermoplastique ou du polymère élastique).

4. Film emboutissable selon une ou plusieurs des revendications 1 à 3, caractérisé en ce que le film supérieur contient ou est constitué, par 100 parts en poids, de (x) et de (y) ou de (x), de (y) et de (z), en outre de 0,01 à 6 parts en poids d'au moins un adjuvant de mise en oeuvre ou additif, de préférence d'au moins un stabilisateur, d'un antioxydant, d'un absorbeur U.V., d'un lubrifiant et/ou d'un agent antistatique dans une couche.

5. Film emboutissable selon une ou plusieurs des revendications 1 à 4, caractérisé en ce que le film supérieur ou la bande de film supérieur contient ou est constitué(e), à titre de matière synthétique, de (x) 10 à 60 parts en poids d'au moins un polymère élastique contenant des groupes réactionnels et/ou d'au moins un élastomère thermoplastique contenant des groupes réactionnels ou d'un polymère ou mélange de polymères contenant des groupes réactionnels avec une teneur en polymères élastiques de plus de 60 % en poids, de préférence de plus de 75 % en poids (par rapport à 100 parts en poids du polymère ou mélange de polymères contenant des élastomères), de (y) 90 à 40 parts en poids d'au moins une polyoléfine ou ionomère comprenant des polyoléfines, contenant des groupes réactionnels, de préférence d'au moins un copolymère, terpolymère et/ou polymère greffé oléfinique contenant des groupes réactionnels et/ou d'un ionomère comprenant ou à base d'un copolymère, terpolymère et/ou polymère greffé polyoléfinique, et/ou de (x), de (y) et de (z) 5 à 25 parts en poids d'une matière thermoplastique (à l'exception cependant de la polyoléfine ou de l'ionomère polyoléfinique, libre, contenant des groupes réactionnels, ou de l'élastomère thermoplastique ou du polymère élastique eux-mêmes), où le polymère élastique, l'élastomère et/ou le polymère ou mélange de polymères comprenant des élastomères (x) présente un module E à 2 % différent, de préférence un module E à 2 % différent, en particulier inférieur, de plus de 10 N/mm² (mesuré à 20 °C) que la polyoléfine et/ou l'ionomère polyoléfinique contenant des groupes réactionnels et où le film en matière synthétique, la bande en matière synthétique ou la couche du film multicouche en matière synthétique ou de la bande de film en matière synthétique contient ou est constitué(e), par rapport à 100 parts en poids de (x) et de (y) ou de (x), de (y) et de (z), en outre de 0,01 à 30 parts en poids, de préférence de 0,1 à 20 parts en poids d'au moins une matière de charge choisie dans le groupe des oxydes métalliques, des carbonates métalliques, des dioxydes métalliques, des hydrates métalliques, des hydroxydes métalliques, des hydrotalcites et/ou des silicates, et/ou d'une matière de charge organique choisie dans le groupe de la cellulose finement divisée, de l'amidon et/ou du carbone finement divisé, de préférence cependant le carbonate de calcium, l'oxyde de Zinc, l'oxyde de magnésium, l'oxyde de calcium et/ou le dioxyde de silicium, le talc, le mica ou la wollastonite, de 0,01 à 5 parts en poids, de préférence de 0,1 à 3 parts en poids d'au moins un stabilisateur, antioxydant et/ou absorbeur U.V., de 0,01 à 5 parts en poids, de préférence de 0,1 à 3 parts en poids d'au moins un colorant et/ou pigment coloré, de 0 à 3 parts en poids, de préférence de 0,01 à 2 parts en poids d'au moins un lubrifiant et/ou agent antistatique, de 0 à 20 parts en poids, de préférence de 1 à 12 parts en poids d'au moins un agent ignifuge.

6. Film emboutissable selon une ou plusieurs des revendications 1 à 5, caractérisé en ce que la polyoléfine contenant des groupes réactionnels (y) est constituée de ou contient un mélange ou un alliage et/ou un copolymère ou polymère greffé d'une oléfine, de préférence l'éthylène et/ou le propylène, et d'un acide carboxylique contenant au moins une liaison insaturée et/ou son anhydride, de préférence l'acide acrylique, l'acide méthacrylique, l'acide maléique et/ou l'anhydride de l'acide maléique, et/ou d'une oléfine ou polyoléfine, de préférence l'éthylène ou le polyéthylène, et d'un composé contenant au moins un groupe époxy, de préférence le méthacrylate de glycidyle, ou d'un copolymère d'un ou de plusieurs de ces composés.

7. Film emboutissable selon une ou plusieurs des revendications 1 à 6, caractérisé en ce que le ou les polymère(s) élastique(s) qui possèdent des groupes réactionnels ou des composés contenant des groupes réactionnels supplémentaires est ou sont constitué(s) d'un copolymère d'éthylène et de propylène (EPM) contenant des groupes réactionnels, d'un copolymère d'éthylène, de propylène et de diène (EPDM) contenant des groupes réactionnels ou modifié par des groupes réactionnels, de polymères diséquencés, contenant des groupes réactionnels, du styrène avec le butadiène, avec l'isoprène, avec l'éthylène-butylène ou avec l'éthylène-propylène, de préférence de polymères triséquencés, contenant des groupes réactionnels, du styrène avec l'éthylène-butylène et l'éthylène-propylène, d'un polyester et/ou polyétherester, polyesteramide, polyétheramide ou copolyester ou polyuréthane ou polymère segmenté de polyéther-uréthane élastique(s).

8. Utilisation du film composite selon une ou plusieurs des revendications 1 à 7, seul ou en combinaison avec une couche de mousse, une couche de support ou un support, une couche de soutien, une couche d'espacement ou une couche de grillage ou de tissu, pour la production de garnitures intérieures de véhicules automobiles, de préférence pour des tableaux de commande ou des tableaux de bord pour véhicules automobiles, de parois latérales pour véhicules automobiles, de garnitures de portières pour véhicules automobiles, d'habillages de plafond pour véhicules automobiles, de parois arrières intérieures pour véhicules automobiles (plage arrière) et d'autres pièces d'habillage d'intérieur ou d'objets pour véhicules automobiles.
